# EUROPEAN PATENT APPLICATION

(11) **EP 4 538 007 A1**
(43) Date of publication of application: **16.04.2025**
(21) Application number: 23207418.7
(22) Date of filing: 02.11.2023
(51) Int. Cl.: B27N 3/04, B27J 1/00, B27M 3/00, B27N 3/18, B27N 5/00, B27N 7/00, F16B 5/00, F16B 7/00, F16B 11/00, F16B 12/04

(54) **SEAMLESS BUTTED LAMINATED BAMBOO LUMBER AND BUTTING METHOD THEREOF**

(30) Priority: 09.10.2023 CN 202311295823
(71) Applicant: SHANGHAI YIZHUYIDING BAMBOO TECHNOLOGY CO., LTD, Shanghai 200000 (CN); Gao, Shiqing, Wenzhou 325500 (CN)
(72) Inventor: Gao, Shiqing, 325500 Wenzhou (CN); Gao, Yonghui, 325500 Wenzhou (CN)
(74) Representative: Patent 42

(57) **Abstract**

Disclosed is a splicing method for seamless butted laminated bamboo lumber (LBL), falling within the technical field of LBL. According to the present disclosure, positions needing to be spliced on end faces of bamboo materials are applied with glue adhesive, and butted by tenon-mortise structures, the tenon-mortise structure being at least one of a semicircle, a semi-ellipse, a V-shape and a U-shape. An included angle between a plane at a top of the V-shape and the end face of the bamboo material is greater than 14° when a single V-shape is adopted. According to the present disclosure, by butting the bamboo materials, products with any length, width and thickness can be produced, and the produced products are seamless, which improves the strength and stability of the products.

## Description

### Technical field

The present disclosure relates to the technical field of laminated bamboo lumber (LBL), in particular to a butting method for the seamless butted LBL and the seamless butted LBL butted by the butting method.

### Background Art

Bamboo is a huge natural resource in China. Although bamboo material and wood material, which are usually used to make boards, seem very similar, there is a big difference between them. Bamboo has a unique structure in which the inside is hollow and only one layer of bamboo meat can be used to make boards. In addition, bamboo has the characteristics of big head and small tail, that is, a thickness of bamboo meat at the root is much greater than that at the top. Moreover, bamboo has a cylindrical structure with radian, which greatly limits the application of bamboo in making boards. In general, a bamboo strip unit with a cuboid shape after removing bamboo green skin and tabasheer has a normal thickness of only 0.3-1.5 cm and a width of only 0.5-3.0 cm, which can hardly be made into a long board.

Conventional bamboo board materials are usually manufactured by gluing and pressing bamboo strips or bamboo board blanks, and different temperatures, pressures and pressing times are selected for different specifications of the bamboo strips or bamboo blanks and the properties of adhesives.

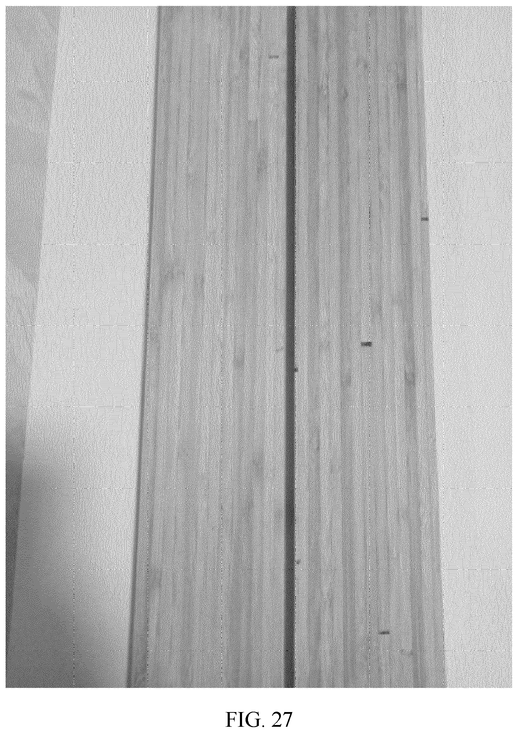

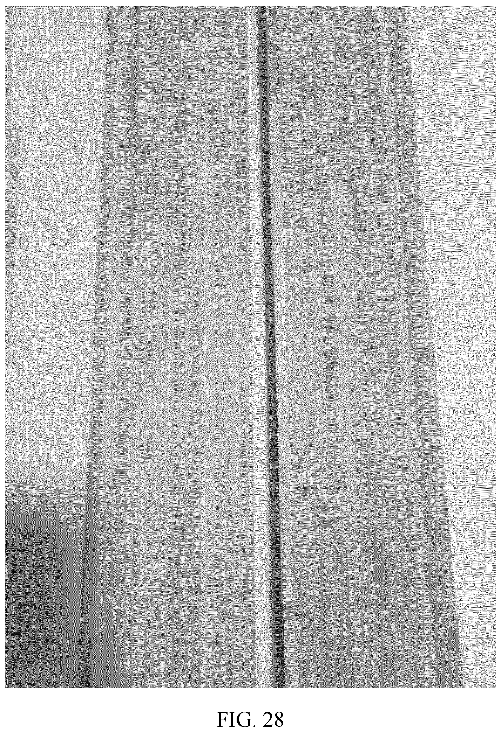

For the purpose of lengthening, the conventional processing is to use a mode of tooth joint (having a tenon-mortise structure with flat teeth, as shown in FIG. 27) or hook joint (having a tenon-mortise structure at ends of the bamboo strip or bamboo board blank with hooks, as shown in FIG. 28) to connect with each other at the ends of the bamboo strips or bamboo board blanks. This mode has two major disadvantages: firstly, the longitudinal and transverse connection strength is not enough; and secondly, the manufactured boards form seams that are unsightly and limit the processing of bamboo products, but also hide dirt, making cleaning more difficult.

In addition, the existing bamboo boards are limited to the manufacture of board materials. With the excellent characteristics of bamboo such as good stability, low deformation, high hardness, and high strength, the technology of the present disclosure greatly shortens the production cycle, so that LBL with a certain thickness, width and length can be manufactured in real sense, and the purposes of replacing wood with bamboo, replacing steel with bamboo and replacing plastic with bamboo can be achieved.

### Summary

In view of the above background, in order to solve the technical problems of insufficient longitudinal and transverse connection strength and seam formation in the conventional manufacturing process, in an aspect of the present disclosure, a butting method for the seamless butted LBL is provided, by butting bamboo materials, products with any length, width and thickness can be produced, and the produced products are seamless, which improves the strength and stability of the products.

In order to achieve the above object, the present disclosure provides the following technical solutions.

A splicing method for the seamless butted LBL includes the following steps of: applying positions needing to be spliced on end faces of bamboo materials with glue adhesive, and butting by tenon-mortise structures, the tenon-mortise structure being at least one of a semicircle, a semi-ellipse, a V-shape and a U-shape,
an included angle between a plane at a top of the V-shape and the end face of the bamboo material being greater than 14° when a single V-shape is adopted.

Preferably, the tenon-mortise structure is a combination of any three of a semicircle, a semi-ellipse, a V-shape and a U-shape.

Preferably, the tenon-mortise structure is a combination of a semi-ellipse, a V-shape and a U-shape.

Preferably, the tenon-mortise structure is a combination of any two of a semicircle, a semi-ellipse, a V-shape and a U-shape.

Preferably, the tenon-mortise structure is semicircular and V-shaped combined butting or semi-elliptical and V-shaped combined butting.

Preferably, the tenon-mortise structure is one of a U-shape, a semicircle and a semi-ellipse.

Preferably, the method further includes the steps of four-sided planning, slicing, sanding, shaping, gluing, and repress-forming.

Preferably, the bamboo material has a length of ≥ 220 mm, a width of ≥ 5 mm, and a thickness of ≥ 3 mm.

Preferably, the tenon-mortise structure is chamfered before splicing.

The present disclosure also provides seamless butted LBL, achieved by splicing according to the above splicing method for the seamless butted LBL.

Compared with the prior art, the present disclosure has the following advantageous effects.

According to the butting method for the seamless butted LBL provided in the present disclosure, the bamboo materials are butted in a butting form by means of at least one of a semicircle, a semi-ellipse, a V-shape and a U-shape, products with any length, width and thickness can be produced in customized, and the produced products are seamless, which improves the strength and stability of the products.

According to the butting method for the seamless butted LBL provided in the present disclosure, the tenon-mortise combinations with different shapes given in the following examples enhance the fixing fastness when lengthening, and avoid the displacement of bamboo strips or board blanks during production before pressing, which makes butting positions of products seamless, and better realizes the automatic lengthening and blank assembling. The problem that the traditional labor-intensive enterprises are difficult to achieve automatic production is solved, and the labor use is reduced, which can truly achieve automatic intelligent production, large production capacity improvement, and great cost reduction.

The seamless butted LBL provided by the present disclosure has three main applications:
**civil category:** indoor and outdoor floors, wallboards, handrails, etc.;
**industrial category:** train floors, freight car floors, compartments, sleepers, marine floors, decks and container compartments, etc.; and
**building materials:** building formwork, columns, indoor and outdoor beams, building materials, etc.

It is to be pointed out that the above specific applications are only the preferred application fields in the present disclosure, which do not constitute limitations to the present disclosure. On the premise that those skilled in the art are familiar with the inventive principles of the present disclosure, applications in other aspects are also within the scope of protection of the present disclosure.

### Brief Description of the Drawings

FIG. 1 is a schematic view of the butting of a semicircle disposed at a certain angle;
FIG. 2 is a schematic view of the butting of semicircles disposed at a certain angle;
FIG. 3 is a schematic view of the butting of a semi-ellipse disposed at a certain angle;
FIG. 4 is a schematic view of the butting of a semi-ellipse disposed at a certain angle;
FIG. 5 is a schematic view of the butting of a semi-ellipse disposed at a certain angle;
FIG. 6 is a schematic view of the butting of a U-shape;
FIG. 7 is a schematic view of the butting of a V-shape disposed at a certain angle;
FIG. 8 is a schematic view of the butting of V-shapes disposed at a certain angle;
FIG. 9 is a schematic view of the butting of a combination of a semicircle and V-shapes disposed at a certain angle;
FIG. 10 is a schematic view of the butting of a combination of a semicircle and V-shapes disposed at a certain angle;
FIG. 11 is a schematic view of the butting of a combination of a semi-ellipse and a V-shape disposed at a certain angle;
FIG. 12 is a schematic view of the butting of a combination of a semi-ellipse and a V-shape disposed at a certain angle;
FIG. 13 is a schematic view of the butting of a combination of a semi-ellipse and a V-shape disposed at a certain angle;
FIG. 14 is a schematic view of the butting of a combination of a semi-ellipse and a V-shape disposed at a certain angle;
FIG. 15 is a schematic view of the butting of a combination of a semi-ellipse and a V-shape disposed at a certain angle;
FIG. 16 is a schematic view of the butting of a combination of a semi-ellipse and a V-shape disposed at a certain angle;
FIG. 17 is a schematic view of the butting of a combination of a semi-ellipse, a V-shape, and a U-shape disposed at a certain angle;
FIG. 18 is a schematic view of the butting of a combination of a semi-ellipse, a V-shape, and a U-shape disposed at a certain angle;
FIG. 19 is a schematic view of the butting of a combination of a semi-ellipse, a V-shape, and a U-shape disposed at a certain angle;
FIG. 20 is a schematic view of the butting of a combination of a semi-ellipse, a V-shape, and a U-shape disposed at a certain angle;
FIG. 21 is a schematic view of the butting of a combination of a semi-ellipse, a V-shape, and a U-shape disposed at a certain angle;
FIG. 22 is a schematic view of a board blank butted by the combinations of semi-ellipses and V-shapes;
FIG. 23 is LBL butted by the combinations of semi-ellipses and V-shapes;
FIG. 24 is LBL butted by the combinations of semi-ellipses and V-shapes;
FIG. 25 is a schematic view of column lengthening butted by the combinations of semi-ellipses and V-shapes;
FIG. 26 is a physical view according to a butting method of the present disclosure;
FIG. 27 is a physical view of tooth joint in the prior art; and
FIG. 28 is a physical view of hook joint in the prior art.

The different angles mentioned in the description of the drawings mean that angles between top ends of semicircle, semi-ellipse, V-shape and U-shape and end faces of bamboos are within a range of 0-180°.

### Detailed Description

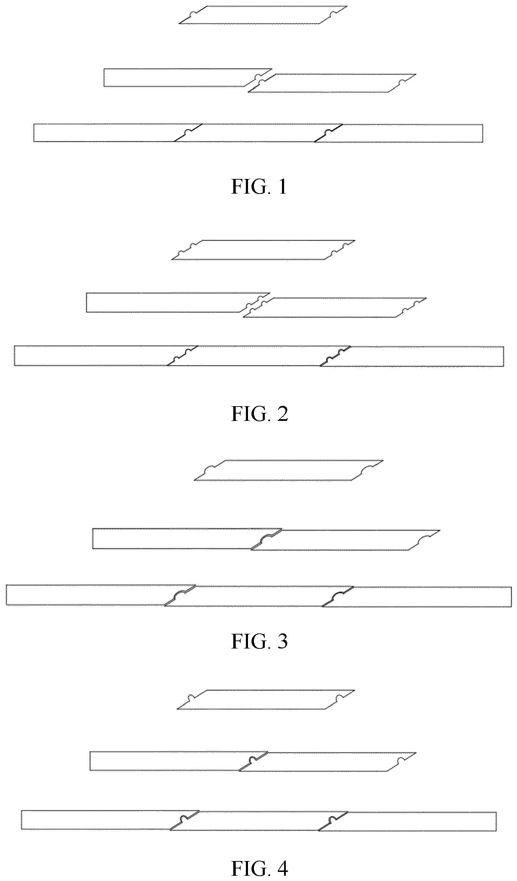

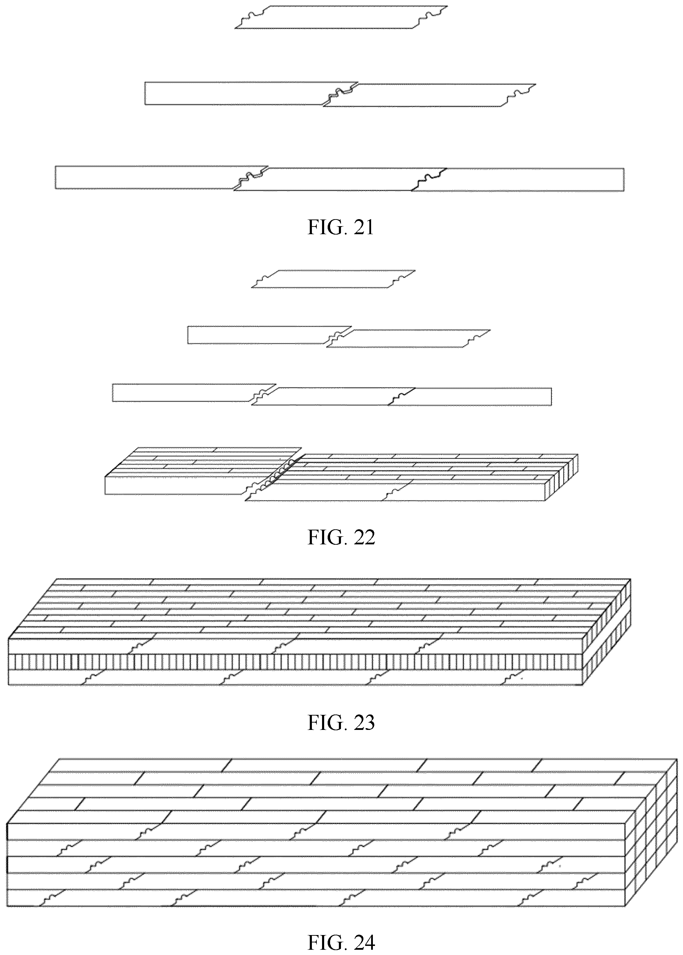

As shown in FIGS. 1-25, the present disclosure provides a splicing method for seamless butted LBL, including the following steps of: applying positions needing to be spliced on end faces of bamboo materials with glue adhesive, and butting by tenon-mortise structures, the tenon-mortise structure being at least one of a semicircle, a semi-ellipse, a V-shape and a U-shape.

An included angle between a plane at a top of the V-shape and the end face of the bamboo material is greater than 14° when a single V-shape is adopted.

The butting in the present disclosure is the butting in at least one of a semicircle, a semi-ellipse, a V-shape and a U-shape, one end of the bamboo material can be a combination of at least one of a semicircle, a semi-ellipse, a V-shape and a U-shape, and one end of the adjacent bamboo material is a groove with a corresponding shape; or
one end of the adjacent bamboo material likewise has a combination of at least one of a semicircle, a semi-ellipse, a V-shape and a U-shape, and one end of the other bamboo material has a groove with a corresponding shape.

It is to be noted that in the present disclosure, the butting of the tenon-mortise structure is preferably disposed with a tenon-mortise structure having an end face slope of 0-90°, more preferably a slope of 30-60°, and directions of the slope are not limited.

In the present disclosure, the tenon-mortise structure is a combination of any three of a semicircle, a semi-ellipse, a V-shape and a U-shape.

In the present disclosure, the tenon-mortise structure is a combination of a semi-ellipse, a V-shape and a U-shape.

In the present disclosure, the tenon-mortise structure is a combination of any two of a semicircle, a semi-ellipse, a V-shape and a U-shape.

In the present disclosure, the tenon-mortise structure is adopted by the semicircular and V-shaped combined butting or the semi-elliptical and V-shaped combined butting.

In the present disclosure, the tenon-mortise structure is one of a U-shape, a semicircle and a semi-ellipse.

In the present disclosure, the method further includes the steps of four-sided planing, slicing, sanding, shaping, gluing, and repress-forming.

In the present disclosure, the bamboo material has a length of ≥ 220 mm, a width of ≥ 5 mm, and a thickness of ≥ 3 mm.

In the present disclosure, the tenon-mortise structure is chamfered before splicing. A U-shaped or V-shaped bottom end is chamfered as appropriate.

The above butting method for the seamless butted LBL provided in the present disclosure specifically includes: the application of glue adhesive to the bamboo strips or board blanks with processed tenon-mortise structures at both ends, and the application of the glue adhesive to the tenon-mortise structures.

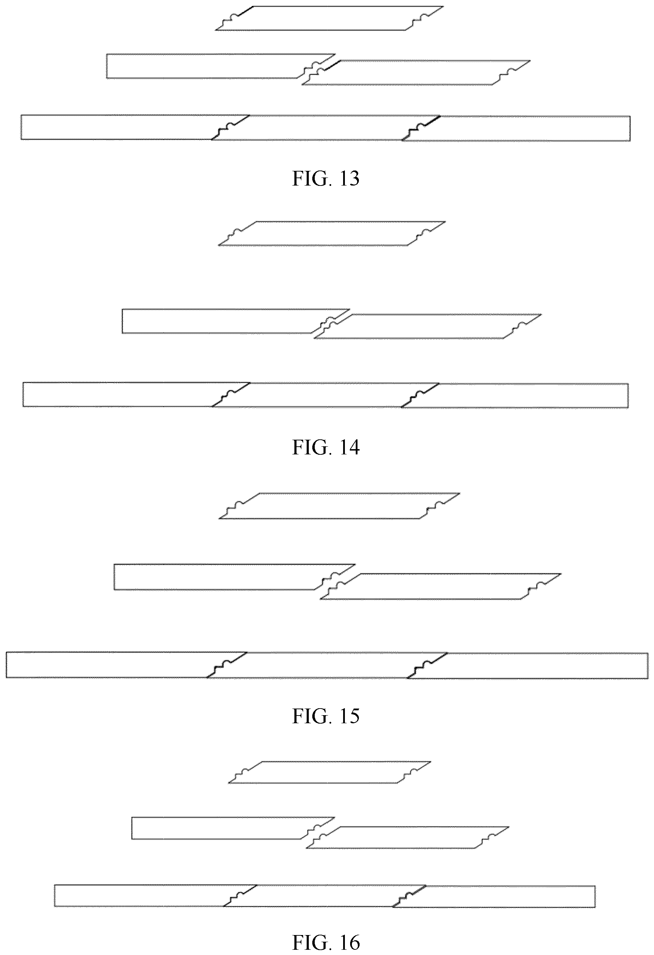

According to the specifications and dimensions of the product, the blank assembling of the above bamboo materials such as bamboo strips or bamboo board blanks applied with the glue adhesive are sequentially arranged in a width or thickness direction by lengthening combined tenon-mortise structures corresponding to each other in a length direction through an automatic lengthening and a blank assembling device or an artificially lengthening board blank method. After the lengthening and blank assembling, the board blank is pressed and formed into a single-layer board (as shown in FIG. 15).

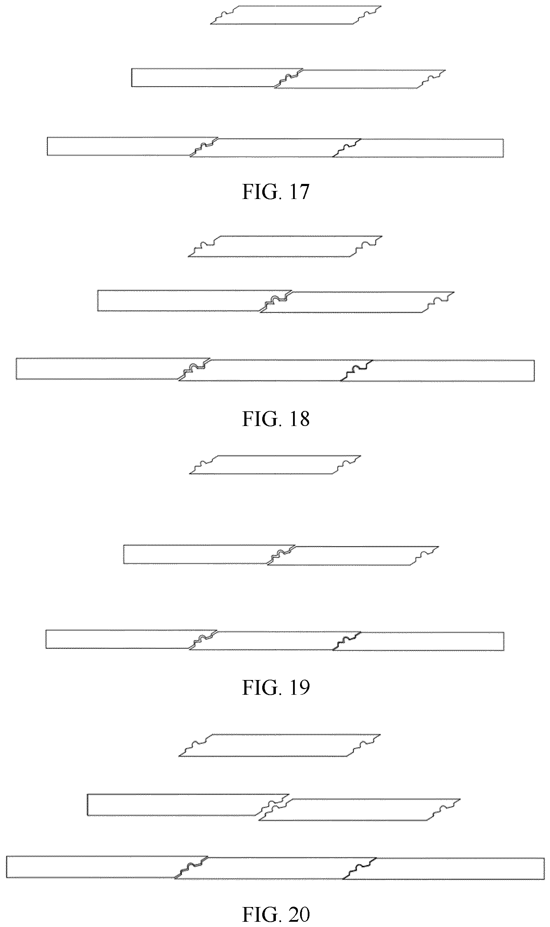

The pressed single-layer board is subjected to four-side planing, slicing, sanding, shaping, glue adhesive applying, and repress-forming one-time or two-time or more than two-time. According to use requirements, the above seamless lengthening technology can produce products with different sizes and different structures; for example, a product with a length of [1000-20000] mmX, a width of [50-3000] mmX, and a thickness of [20-300] mm, as shown in FIGS. 17, 19 and 25.

In another aspect, the present disclosure provides seamless butted LBL achieved by splicing according to the above butting method for the seamless butted LBL.

It is to be noted that the bamboo strips are selected from the same source, such as Zhejiang, and the bamboo materials in the present disclosure are preferably bamboo materials from the same batch in Zhejiang.

It is to be noted that the strength of bamboo from the same batch of the same source varies depending on factors such as different growth environments. Therefore, there are differences between the static bending strength and elastic modulus of the following examples.

The technical solutions of the present disclosure will be described in detail with specific examples. The dimensions of bamboo board test pieces in the following examples are all selected to be 450 mm in length, 50 mm in width and 20 mm in thickness. The bamboo strips are selected as the bamboo materials. The slope of the end face of the tenon-mortise structure is selected to be 45°. The bamboo strips with the processed tenon-mortise structures at both ends are applied with glue adhesive, and the positions of the tenon-mortise structures are also applied with the glue adhesive. The bamboo board pressed by means of artificial lengthening is tested according to the test standard of GB/T-17657-2022.

### Examples 1-2

A semicircular tenon-mortise structure as shown in FIGS. 1-2 was adopted for lengthening.

### Examples 3-5

A semi-elliptical tenon-mortise structure as shown in FIGS. 3-5 was adopted for lengthening.

### Example 6

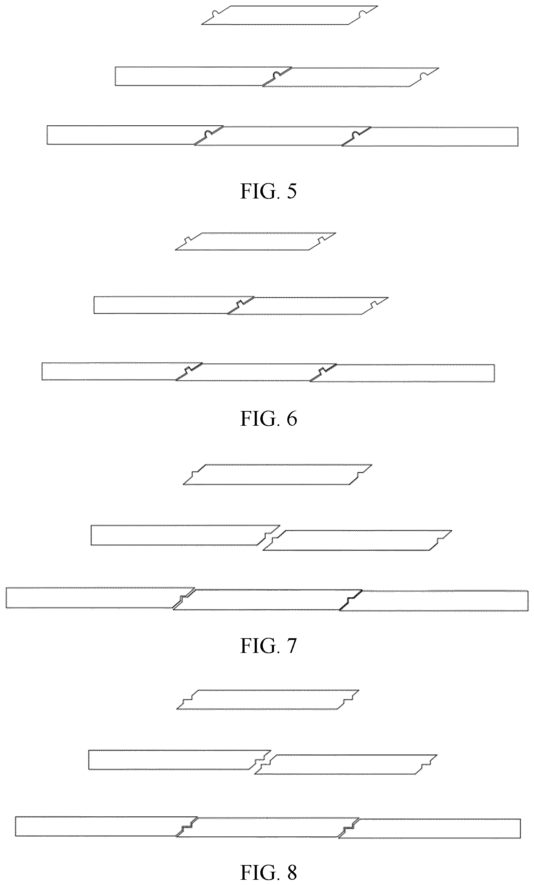

A U-shaped tenon-mortise structure as shown in FIG. 6 was adopted for lengthening.

### Examples 7-8

AV-shaped tenon-mortise structure as shown in FIGS. 7-8 was adopted for lengthening.

### Examples 9-10

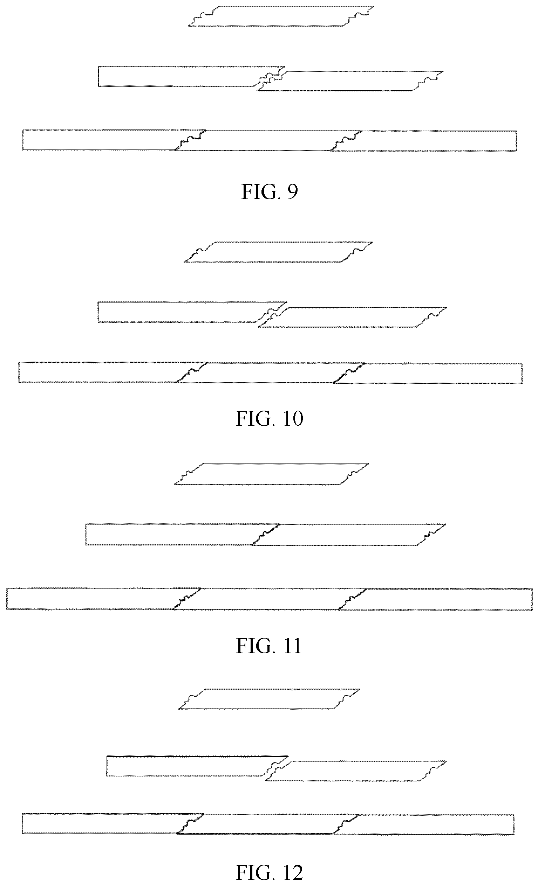

A semicircular and V-shaped tenon-mortise structure as shown in FIGS. 9-10 was adopted for lengthening.

### Examples 11-16

A semi-elliptical and V-shaped tenon-mortise structure as shown in FIGS. 11-16 was adopted for lengthening.

### Examples 17-21

A semi-elliptical, V-shaped and U-shaped tenon-mortise structure as shown in FIGS. 17-21 was adopted for lengthening.

### Comparative Example 1

A toothing tenon-mortise structure as shown in FIG. 27 was adopted for lengthening.

### Comparative Example 2

A hooking tenon-mortise structure as shown in FIG. 28 was adopted for lengthening.

The Examples 1-21 and Comparative Examples 1-2 are tested for the static bending strength (Mpa) and elastic modulus (Mpa) according to GB/T-17657-2022, and the results are shown in Table 1.

**Table 1 Test results of Examples 1-21 and Comparative Examples 1-2**

| Example | Static bending strength (Mpa) | Elastic modulus (Mpa) |
|---|---|---|
| Example 1 | 135.667 | 10728.976 |
| Example 2 | 136.772 | 10755.973 |
| Example 3 | 135.787 | 10745.742 |
| Example 4 | 135.897 | 10612.712 |
| Example 5 | 136.923 | 10632.792 |
| Example 6 | 137.228 | 10731.95 |
| Example 7 | 138.356 | 10768.125 |
| Example 8 | 137.293 | 10659.331 |
| Example 9 | 136.997 | 10689.356 |
| Example 10 | 137.125 | 10712.089 |
| Example 11 | 137.237 | 10723.067 |
| Example 12 | 138.975 | 10769.118 |
| Example 13 | 136.559 | 10697.553 |
| Example 14 | 136.972 | 10698.474 |
| Example 15 | 136.815 | 10697.895 |
| Example 16 | 138.912 | 10769.231 |
| Example 17 | 137.956 | 10723.088 |
| Example 18 | 138.559 | 10768.975 |
| Example 19 | 135.997 | 10696.452 |
| Example 20 | 136.883 | 10697.978 |
| Example 21 | 136.959 | 10697.993 |
| Comparative Example 1 | 106.829 | 9405.587 |
| Comparative Example 2 | 108.465 | 9685.868 |

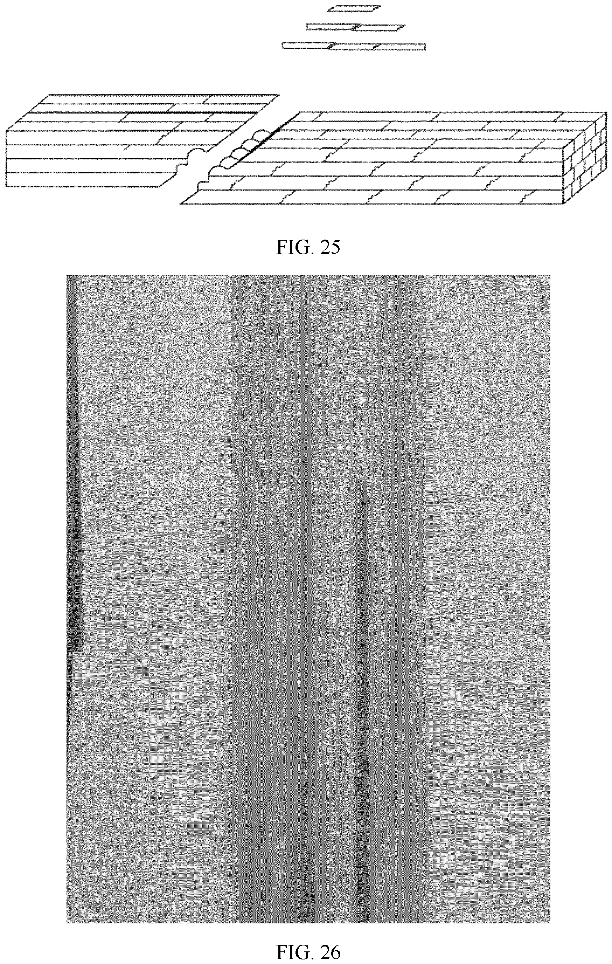

From the above data in Table 1, it can be seen that both the static bending strength and elastic modulus of the butting method of the present disclosure are superior to those of the conventional toothing and hooking, and from FIGS. 26-28, it can be seen that final products using the butting method of the present disclosure achieves seamlessness while the products by means of conventional toothing and hooking still have large gaps.

The above are only the preferred examples of the present disclosure; but the protection scope of the present disclosure is not limited to this. Within the technical scope disclosed by the present disclosure, any equivalent substitution or change made by anyone familiar with the technical field according to the technical solution and the improvement conception of the present disclosure shall be covered by the protection scope of the present disclosure.

## Claims

1. A splicing method for seamless butted laminated bamboo lumber (LBL), comprising the following steps of: applying positions needing to be spliced on end faces of bamboo materials with glue adhesive, and butting by tenon-mortise structures, the tenon-mortise structure being at least one of a semicircle, a semi-ellipse, a V-shape and a U-shape,
an included angle between a plane at a top of the V-shape and the end face of the bamboo material being greater than 14° when a single V-shape is adopted.

2. The splicing method for seamless butted LBL according to claim 1, wherein the tenon-mortise structure is a combination of any three of a semicircle, a semi-ellipse, a V-shape and a U-shape.

3. The splicing method for seamless butted LBL according to claim 2, wherein the tenon-mortise structure is a combination of a semi-ellipse, a V-shape and a U-shape.

4. The splicing method for seamless butted LBL according to claim 1, wherein the tenon-mortise structure is a combination of any two of a semicircle, a semi-ellipse, a V-shape and a U-shape.

5. The splicing method for seamless butted LBL according to claim 4, wherein the tenon-mortise structure is semicircular and V-shaped combined butting or semi-elliptical and V-shaped combined butting.

6. The splicing method for seamless butted LBL according to claim 1, wherein the tenon-mortise structure is one of a U-shape, a semicircle and a semi-ellipse.

7. The splicing method for seamless butted LBL according to claim 1, further comprising the steps of four-sided planing, slicing, sanding, shaping, gluing, and repress-forming.

8. The splicing method for seamless butted LBL according to claim 1, wherein the bamboo material has a length of ≥ 220 mm, a width of ≥ 5 mm, and a thickness of ≥ 3 mm.

9. The splicing method for seamless butted LBL according to any one of claims 1 to 8, wherein the tenon-mortise structure is chamfered before splicing.

10. Seamless butted LBL, achieved by splicing according to a splicing method for seamless butted LBL according to any one of claims 1 to 9.

## Amended claims

### Amended claims in accordance with Rule 137(2) EPC.

**1.** A splicing method for butted laminated bamboo lumber (LBL), comprising the following steps of: applying positions needing to be spliced on end faces of bamboo materials with glue adhesive, and butting by tenon-mortise structures, **characterized in that,**
the tenon-mortise structure is a combination of a semi-ellipse, a V-shape and a U-shape; and
an included angle between a plane at a top of the V-shape and the end face of the bamboo material is greater than 14° and less than or equal to 180° when a single V-shape is adopted.

**2.** The splicing method for butted LBL according to claim 1, wherein the bamboo material has a length of ≥ 220 mm, a width of ≥ 5 mm, and a thickness of ≥ 3 mm.

**3.** The splicing method for butted LBL according to claim 1 or 2, wherein the tenon-mortise structure is chamfered before splicing.

**4.** Butted LBL, **characterized in that,** the butted LBL is achieved by splicing according to the splicing method for butted LBL according to any one of claims 1 to 3.

**1.** A splicing method for butted laminated bamboo lumber (LBL), comprising the following steps of: applying positions needing to be spliced on end faces of bamboo materials with glue adhesive, and butting by tenon-mortise structures, the tenon-mortise structure being a combination of a semi-ellipse, a V-shape and a U-shape, and
an included angle between a plane at a top of the V-shape and the end face of the bamboo material being greater than 14° and less than or equal to 180° when a single V-shape is adopted, **characterized in that,**
the bamboo material has a length of ≥ 220 mm, a width of ≥ 5 mm, and a thickness of ≥ 3 mm.

**2.** The splicing method for butted LBL according to claim 1, wherein the tenon-mortise structure is chamfered before splicing.

**3.** Butted LBL, **characterized in that,** the butted LBL is achieved by splicing according to the splicing method for butted LBL according to claim 1 or 2.
